# EUROPEAN PATENT SPECIFICATION

(11) **EP 1 316 819 B1**
(45) Date of publication and mention of the grant of the patent: **23.11.2005**
(21) Application number: 01961206.8
(22) Date of filing: 30.08.2001
(51) Int. Cl.: C08G 18/38, C08G 18/76, C08G 18/77, C08K 3/06, G02B 1/04

(54) **COMPOSITION FOR OPTICAL MATERIAL**
ZUSAMMENSETZUNG FÜR OPTISCHES MATERIAL
COMPOSITION POUR MATERIAU OPTIQUE

(30) Priority: 08.09.2000 JP 2000273048
(43) Date of publication of application: 04.06.2003
(73) Proprietor: MITSUBISHI GAS CHEMICAL COMPANY, INC., Tokyo 100-0005 (JP)
(72) Inventor: YOSHIMURA, Yuichi Mitsubishi Gas Chem. Company Inc, Katsushika-ku, Tokyo 125-0051 (JP); TAKEUCHI, Motoharu Mitsubishi Gas Ch. Company Inc., Katsushika-ku, Tokyo 125-0051 (JP); HORIKOSHI, Hiroshi Mitsubishi Gas Ch. Company Inc., Katsushika-ku, Tokyo 125-0051 (JP)
(74) Representative: Gille Hrabal Struck Neidlein Prop Roos
(86) International application number: PCT/JP2001/007478
(87) International publication number: WO 2002/021164

(56) References cited:
- EP-A- 1 046 931
- EP-A1- 0 896 972
- WO-A-00/26272
- JP-A- 4 078 801
- US-A- 3 329 650
- US-A- 3 446 780

## Description

The present invention relates to a composition suitably used for producing optical materials such as plastic lenses, prisms, optical fibers, information recording media and filters, particularly for producing plastic spectacle lenses.

### BACKGROUND ART

Plastic materials have been widely used in various optical applications, particularly in manufacturing spectacle lenses, because of their light weight, toughness and easiness of dyeing. Optical materials, particularly spectacle lenses are required to have a low specific gravity, a high transparency, a low degree of yellowness and a high strength as well as optical properties such as a high refractive index and a large Abbe's number. The high refractive index and large Abbe's number enable production of lenses having a reduced thickness.

Hitherto, various studies have been made to reduce the thickness of lens by increasing the refractive index, and many novel organic compounds containing sulfur and/or selenium have been proposed for this purpose. These organic compounds are generally classified into thiol compounds for polythiourethane materials and episulfide compounds for polyalkylenesulfide materials. The novel thiol compounds are exemplified by branched polythiol compounds having four sulfur atoms in one molecule as described in Japanese Patent Application Laid-Open No. 5-148340, branched polythiol compounds having five sulfur atoms in one molecule as described in Japanese Patent Application Laid-Open No. 2-270859, and dithiol compounds having a dithiane ring structure in the molecule as described in Japanese Patent Application Laid-Open No. 6-192250. However, since these thiol compounds are copolymerized with aliphatic isocyanates having a low refractive index or aromatic isocyanates having a low Abbe's number, the obtained polythiourethane materials have failed to exhibit well-balanced optical properties, i.e., sufficiently high refractive index and Abbe's number. More specifically, the Abbe's number of the polythiourethane materials is about 50 to 55 at most when the refractive index is 1.5 to 1.55, about 40 at most when the refractive index is 1.60, and about 32 at most when the refractive index is 1.66. As the novel episulfide compounds having a high refractive index and a large Abbe's number, Japanese Patent Application Laid-Open No. 9-110979 has proposed straight-chain polyepisulfide compounds, Japanese Patent Application Laid-Open No. 9-71580 has proposed branched polyepisulfide compounds, Japanese Patent Application Laid-Open No. 9-255781 has proposed polyepisulfide compounds having a cyclic backbone structure, and Japanese Patent Application Laid-Open No. 11-140046 has proposed selenium-containing polyepisulfide compounds. Although these homopolymerizable episulfide compounds successfully provide materials having well-balanced optical properties, i.e., exhibiting a refractive index of 1.70 or higher and an Abbe's number of 30 or larger, the materials have failed to show a sufficiently high strength. Therefore, optical products obtained from such materials must be increased in thickness to ensure their strength. Thus, notwithstanding the high refractive index capable of designing products having a small thickness, the low strength of the materials prohibits the reduction of thickness.

### DISCLOSURE OF THE INVENTION

An object of the present invention is to provide an optical material not only having a sufficiently high strength but also exhibiting well-balanced optical properties, i.e., high refractive index and large Abbe's number, thereby enabling the production of a lens having a reduced thickness.

As a result of extensive studies in view of the above object, the inventors have found that a cured product produced by polymerizing a composition comprising as essential components (a) a compound having in one molecule at least one group selected from the group consisting of isocyanate group and isothiocyanate group, (b) a compound having at least one mercapto group in one molecule and (c) at least one inorganic component selected from the group consisting of sulfur, selenium and selenium sulfide, has a sufficiently high strength and exhibits well-balanced optical properties, i.e., high refractive index and large Abbe's number, and is therefore suitable as an optical material. The present invention has been accomplished on the basis of this finding.

### DETAILED DESCRIPTION OF THE INVENTION

The composition of the present invention comprises (a) a compound having in one molecule at least one group selected from the group consisting of isocyanate group and isothiocyanate group, (b) a compound having at least one mercapto group in one molecule and (c) at least one inorganic component selected from the group consisting of sulfur, selenium an selenium sulfide. In the composition of the present invention, the amount proportions of the compound (a), the compound (b) and the inorganic component (c) depend on the refractive index and viscosity of the respective compounds and the intended physical properties of the resulting resin, and are 10 to 90 parts by weight for the compound (a), 10 to 90 parts by weight for the compound (b) and 0.1 to 50 parts by weight for the inorganic component (c). The amount proportions outside the above ranges result in failure to obtain the high impact resistance which is the object of the present invention. Other drawbacks are poor heat resistance, deterioration of color tone of the cured product and failure in achieving a high refractive index and a large Abbe's number intended by the invention. More preferred ranges are 20 to 80 parts by weight for the compound (a), 20 to 80 parts by weight for the compound (b) and 1 to 40 parts by weight for the inorganic component (c), and still more preferred ranges are 20 to 70 parts by weight for the compound (a), 20 to 70 parts by weight for the compound (b) and 5 to 30 parts by weight for the inorganic component (c).

To further improve the impact resistance of the optical material obtained by curing the composition by polymerization, the compound (a) preferably has at least two groups selected from the group consisting of isocyanate group and isothiocyanate group in one molecule and the compound (b) preferably has at least two mercapto groups in one molecule.

To attain a high refractive index as one object of the present invention, the compound (b) preferably contains sulfur and/or selenium in addition to the mercapto group, more preferably contains sulfur in addition to the mercapto group, and still more preferably contains sulfide linkage in addition to the mercapto group.

The compound (a) generally includes those compounds having at least one group selected from the group consisting of isocyanate group and isothiocyanate group in one molecule. Examples of the compound (a) include isocyanates such as methyl isocyanate, ethyl isocyanate, propyl isocyanate, isopropyl isocyanate, n-butyl isocyanate, sec-butyl isocyanate, tert-butyl isocyanate, pentyl isocyanate, hoxyl isocyanate, octyl isocyanate, dodecyl isocyanate, cyclohexyl isocyanate, phenyl isocyanate, tolyl isocyanate, diethylene diisocyanate, tetramethylene diisocyanate, hexamethylene diisocyanate, trimethylhexamethylene diisocyanate, cyclohexane diisocyanate, 1,3-bis(isocyanatomethyl)cyclohexane, 1,4-bis(isocyanatomethyl)cyclohexane, isophorone diisocyanate, 2,6-bis(isocyanatomethyl)decahydronaphthalene, lysine triisocyanate, 2,4-tolylene diisocyanate, 2,6-tolylene diisocyanate, o-toluidine diisocyanate, 4,4'-diphenylmethane diisocyanate, diphenyl ether diisocyanate, 3-(2'-isonyanatocyclohexyl)propyl isocyanate, tris(phenylisocyanate)thiophosphate, isopropylidenebis(cyclohexyl isocyanate), 2,2'-bis(4-isocyanatophenyl)propane, triphenylmethane triisocyanate, bis(diisocyanatotolyl)phenylmethane, 4,4',4"-triisocyanato-2,5-dimethoxyphenylamine, 3,3'-dimethoxybenzidine-4,4'-diisocyanate, 1,3-phenylene diisocyanate, 1,4-phenylene diisocyanate, 4,4'-diisocyanatobiphenyl, 4,4'-diisocyanato-3,3'-dimethylbiphenyl, dicyclohexylmethane-4,4'-diisocyanate, 1,1'-methylenebis(4-isocyanatobenzene), 1,1'-methylenebis(3-methyl-4-isocyanatobenzene), m-xylylene diisocyanate, p-xylylene diisocyanate, 1,3-bis(1-isocyanato-1-methylethyl)benzene, 1,4-bis(1-isocyanato-1-methylethyl)benzene, 1,3-bis(2-isocyanato-propyl)benzene, 2,6-bis(isocyanatomethyl)naphthalene, 1,5-naphthalene diisocyanato, bis(isocyanatomethyl)tetrahydrodicyclopentadiene, bis(isocyanatomethyl)dicyclopentadiene, bis(isocyanatomethyl)tetrahydrothiophene, 2,5-diisocyanatomethylnorbornene, bis(isocyanatomethyl)adamantane, dimer acid diisocyanate, 1,3,5-tri(1-isocyanatohexyl)isocyanuric acid, thiodiethyl diisocyanate, thiodipropyl diisocyanate, thiodihexyl diisocyanate, bis[(4-isocyanatomethyl)phenyl] sulfide, 2,5-diisocyanato-1,4-dithiane, 2,5-diisocyanatomethyl-1,4-dithiane, 2,5-diisocyanatomethylthiophene, dithiodiethyl diisocyanate and dithiodipropyl diisocyanate; and compounds obtained by partially or entirely replacing the isocyanate groups in the above isocyanates with isothiocyanate groups. Among these compounds, the polyisocyanates may be in the form of burette reaction dimers, cyclic trimers or addition products with alcohols or thiols.

Of these compounds, preferred are m-xylylene diisocyanate, 2,5-diisocyanatomethyl-1,4-dithiane, dicyclohexylmethane-4,4'-diisocyanate, hexamethylene diisocyanate, 1,3-bis(isocyanatomethyl)cyclohexane and 2,5-diisocyanatomethylnorbornene.

The compound (b) used in the present invention generally includes those compounds having at least one mercapto group in one molecule. Examples of the compound (b) include mercaptans such as methyl mercaptan, ethyl mercaptan, n-propyl mercaptan, n-butyl mercaptan, allyl mercaptan, n-hexyl mercaptan, n-octyl mercaptan, n-decyl mercaptan, n-dodecyl mercaptan, n-tetradecyl mercaptan, n-hexadecyl mercaptan, n-octadecyl mercaptan, cyclohexyl mercaptan, isopropyl mercaptan, tert-butyl mercaptan, tert-nonyl mercaptan, tert-dodecyl mercaptan, phenyl mercaptan, benzyl mercaptan, 3-methylphenyl mercaptan, 4-methylphenyl mercaptan, 4-chlorobenzyl mercaptan, 4-vinylbenzyl mercaptan, 3-vinylbenzyl mercaptan, methyl mercaptopropionate, ethyl thioglycolate, n-butyl thioglycolate, n-octyl thioglycolate, methyl (3-mercaptopropionate), ethyl (3-mercaptopropionate), 3-methoxybutyl (3-mercaptopropionate), n-butyl (3-mercaptopropionate), 2-ethylhexyl (3-mercaptopropionate), n-octyl (3-mercaptopropionate), 2-mercaptoethanol, 3-mercapto-1,2-propanediol, 2-mercapto-1,3-propanediol, mercaptoacetic acid, mercaptoglycolic acid, mercaptopropionic acid, methanedithiol, methanetrithiol, 3-mercaptopropanol, 2-mercaptopropanol, 2-phenyl-2-mercaptoethanol, 1,2-dimercaptoethane, 1,2-dimercaptopropane, 1,3-dimercaptopropane, 2,2-dimercaptopropane, 1,4-dimercaptobutane, 1,6-dimercaptohexane, bis(2-mercaptoethyl) ether, bis(2-mercaptoethyl) sulfide, 1,2-bis(2-mercaptoethyloxy)ethane, 1,2-bis(2-mercaptoethylthio)ethane, 2,3-dimercapto-1-propanol, 1,3-dimercapto-2-propanol, 1,2,3-trimercaptopropane, 2-mercaptomethyl-1,3-dimercaptopropane, 2-mercaptomethyl-1,4-dimercaptobutane, 2-(2-mercaptoethylthio)-1,3-dimercaptopropane, 4-mercaptomethyl-1,8-dimercapto-3,6-dithiaoctane, 2-mercaptomethyl-1,5-dimercapto-3-thiapentane, 2,4-dimercaptomethyl-1,5-dimercapto-3-thiapentane, 4,8-dimercaptomethyl-1,11-dimercapto-3,6,9-trithiaundecane, 4,7-dimercaptomethyl-1,11-dimercapto-3,6,9-trithiaundecane, 5,7-dimercaptomethyl.1,11.dimercapto-3,6,9-txithiaundecane, 1,1,1-tris(mercaptomethyl)propane, tetrakis(mercaptomethyl)methane, ethylene glycol bis(2-mercaptoacotate), ethylene glycol bis(3-mercaptopropionate), diethylene glycol bis(2-mercaptoacetate), diethylene glycol bis(3-mercaptopropionate), 1,4,butanediol bis(2-mercaptoacetate), 1,4-butanediol bis(3-mercaptopropionate), trimethylolpropane tris(2-mercaptoacetate), trimethylolpropane tris(3-mercaptopropionate), pentaerythritol tetrakis(2-mercaptoacetate), pentaerythritol tetrakis(3-mercaptopropionate), 1,2-dimercaptocyclohexane, 1,3-dimercaptocyclohexane, 1,4-dimercaptocyclohexane, 1,3-bis-(mercaptomethyl)cyclohexane, 1,4-bis(mercaptomethyl)cyclohexane, 2,5-bis(mercaptomethyl)-1,4-dithiane, 2,5-bis(2-mercaptoethyl)-1,4-dithiane, 2,5-bis(2-mercaptoethylthiomethyl)-1,4-dithiane, 2,5-bis(mercaptomethyl)-1-thiane, 2,5-bis(2-mercaptoethyl)-1-thiane, 2,5-bis(mercaptomethyl)thiophene, thiophenol, 4-tert-butylthiophenol, 2-methylthiophenol, 3-methylthiophenol, 4-methylthiophenol, 2-vinylthiophenol, 3-vinylthiophenol, 4-vinylthiophenol, 2-hydroxythiophenol, 3-hydroxythiophenol, 4-hydroxythiophenol, 1,2-dimercaptobenzne, 1,3-dimercaptobenzne, 1,4-dimercaptobenzne, 1,3-bis(marcaptomethyl)benzene, 1,4-bis(mercaptomethyl)benzene, 2,2'-dimercaptobiphenyl, 4,4'-dimercaptobiphenyl, bis(4-mercaptophenyl)methane, 2,2-bis(4-mercaptophenyl)propane, bis(4-mercaptophenyl) ether, bis(4-mercaptophenyl) sulfide, bis(4-mercaptophenyl) sulfone, bis(4-mercaptomethylphenyl)methane. 2,2-bis(4-mercaptomethylphenyl)propane, bis(4-mercaptomethylphenyl) ether, bis(4-mercaptomethylphenyl) sulfide, mercaptobenzoic acid, 2-mercaptoimidazole, 2-mercapto-1-methylimidazole, 2,5-dimercapto-1,3,4-thiadiazole, 3,4-thiophenedithiol, glyceryl dithioglycolate, 2-selenoethanol, bis(2-mercaptoethyl) selenide, bis(1,3-dimercapto-2-propyl) selenide, 2,3-bis(mercaptoethylseleno)-1-propanethiol, 2-mercaptomethyl-1,5-dimercapto-3-selenapentane, 4,8-bis(mercaptomethyl)-1,11-dimercapto-3,9-dithia-6-selenaundecane, 4,8-bis(mercaptomethyl)-1,11-dimercapto-6-thia-3,9-diselenaundecane, 4,8-bis(mercaptomethyl)-1,11-dimercapto-3,6,9-triselenaundecane, bis(hydroxymercaptoethylselenomethyl)benzene, 1,4-dimercapto-2,3-bis(mercaptoethylseleno)butane, 1,2,3,4-tetrakis(mercaptoethylseleno)butane, 1,9-dimercapto-5,5-bis(mercaptomethyl). 3,7-diselenanonane, tris(mercaptomethyl)-1,8-dimercapto-6-thia-3-selenaoctane, bis(mercaptoethylselenomethyl)benzene, 2,5-diseleno-1,4-dithiane, 2,5-bis(selenomethyl)-1,4-dithiane, 2,5-bis(mercaptoethylselenomethyl)-1,4-dithiane, 2,6-dimercapto-1-selena-4-thiane, 3,5-dimercapto-1-selena-4-thiane, 2,6-bis(mercaptomethyl)-1-selena-4-thiane, 3,5-bis(mercaptomethyl)-1-selena-4-thiane, 2,5-dimercapto-1,4-diselenane, 2,6-dimercapto-1,4-diselenane, 2,5-bis(mercaptomethyl)-1,4-diselenane, 2,6-bie(mercaptomethyl)-1,4-diselenane, 2,5-dimercaptoselenane, 3,4-dimercaptoselenane, 2,5-bis(mercaptomethyl)selenane, 3,4-bis(mercaptomethyl)selenane, 2,5-bis(selenomethyl)selenane, 3,4-bis(selenomethyl)selenane, 4,5-dimercapto-1,3-diselenolane, 4,5-bis(mercaptomethyl)-1,8-diselenolane, 3,6-dimercaptotriselenocyclooctane, 3,6-bis(mercaptomethyl)triselenocyclooctane, 3,6-diselenotriselenocyclooctane, 3,6-bis(selenomethyl)triselenocyclooctane, 1,2,6,7-tetramercapto-4-thiaheptane, tetrakis(7-mercapto-2,5-dithiaheptyl)methane, tetrakis(4-mercapto-2-thiabutyl)methane and pentaerythritbiol The polymercaptans cited above may be oligomers having a polymerization degree of 2 to 20.

Of these compounds (b), preferred are 4-mercaptomethyl-1,8-dimercapto-3,6-dithiaoctane, 2,6-bis(mercaptomethyl)-1,4-dithiane, 2-mercaptomethyl-1,5-dimercapto-3-thiapentane, pentaerythritol tetrakis(3-mercaptopropionate), bis(2-mercaptoethyl) sulfide, pentaerythritol tetrakis(2-mercaptoacetate), 1,2,6,7-tetramercapto-4-thiaheptane, tetrakis(7-mercapto)-2,5-dithiaheptyl)methane, tetrakis(4-mercapto-2-thiabutyl)methane and pentaerythrithiol.

The inorganic component (c) used in the present invention includes sulfur, selenium and selenium sulfide.

It should be noted that the compound (a), the compound (b) and the inorganic component (c) are not limited to the above-specified compounds as long as the compound (a) is selected from compounds having at least one group selected from the group consisting of isocyanate group and isothiocyanate group in one molecule, the compound (b) is selected from compounds having at least one mercapto group in one molecule, and the inorganic component (c) is selected from sulfur, selenium and inorganic compounds containing sulfur and/or selenium. The compound (a), the compound (b) and the inorganic component (c) may be respectively used alone or in combination of two or more.

The composition of the present invention comprising the compound (a), the compound (b) and the inorganic component (c) is made into an optical material by polymerization under heating in the presence or absence of, preferably in the presence of a curing catalyst. As the curing catalyst, there may be used amines, complexes of amines and boron, phosphine compounds, quaternary ammonium salts, quaternary phosphonium salts, tertiary sulfonium salts, secondary iodonium salts, mineral acids, Lewis acids, organic acids, silicic acids, tetrafluoroboric acid, peroxides, azo compounds, condensation products of aldehydes and amine compounds, guanidine compounds, thiourea compounds, thiazole compounds, sulfenamide compounds, thiuram compounds, dithiocarbamates, xanthates and acid phosphoric acid esters. Typical examples of the curing catalyst are shown below.

### (1) Amines:

Primary amines such as ethylamine, n-propylamine, sec-propylamine, n-butylamine, sec-butylamine, isobutylamine, tert-butylamine, pentylamine, hexylamine, heptylamine, octylamine, decylamine, laurylamine, myristylamine, 1,2-dimethylhexylamine, 3-pentylamine, 2-ethylhexylamine, allylamine, aminoethanol, 1-aminopropanol, 2-aminopropanol, aminobutanol, aminopentanol, aminohexanol, 3-ethoxypropylamine, 3-propoxypropylamine, 3-isopropoxypropylamine, 3-butoxypropylamine, 3-isobutoxypropylamine 3-(2-ethylhexyloxy)propylamine, aminocyclopentane, aminocyclohexane, aminonorbornene, aminomethylcyclohexane, aminobenzene, benzylamine, phenetylamine, α-phenylethylamine, naphthylamine and furfurylamine; primary polyamines such as ethylenediamine, 1,2-diaminopropane, 1,3-diaminopropane, 1,2-diaminobutane, 1,3-diaminobutane, 1,4-diaminobutane, 1,5-diaminopentane, 1,6-diaminohexane, 1,7-diaminoheptane, 1,8-diaminooctane, dimethylaminopropylamine, diethylaminopropylamine, bis-(3-aminopropyl) ether, 1,2-bis-(3-aminopropoxy)ethane, 1,3-bis(3-aminopropoxy)-2,2'-dimethylpropane, aminoethylethanolamine, 1,2-, 1,3- or 1,4-bisaminocyclohexane. 1,3- or 1,4-bisaminomethylcyclohexane, 1,3- or 1,4-bisaminoethylcyclohexane, 1,3- or 1,4-bisaminopropylcyclohexane, hydrogenated 4,4'-diamanodiphenylmethane, 2- or 4-aminopiperidine, 2- or 4-aminomethylpiperidine, 2- or 4-aminoethylpiperidine, N-aminoethylpiperidine, N-aminopropylpiperidine, N-aminoethylmorpholine, N-aminopropylmorpholine, isophoronediamine, menthanediamine, 1,4-bisaminopropylpiperazine, o-, m- or p-phenylenediamine, 2,4- or 2,6-tolylenediamine, 2,4-toluenediamine, m-aminobenzylamine, 4-chloro-o-phenylenediamine, tetrachloro-p-xylylenediamine, 4-methoxy-6-methyl-m-phenylenediamine, m- or p-xylylenediamine, 1,5- or 2,6-naphthalenediamine, benzidine, 4,4'-bis(o-toluidine), dianisidine, 4,4'-diaminodiphenylmethane, 2,2-(4,4'-diaminodiphenyl)propane, 4,4'-diaminodiphenyl ether, 4,4'-thiodianiline, 4,4'-diaminodiphenyl sulfone, 4,4'-diaminoditolyl sulfone, methylenebis(o-chloroaniline), 3,9-bis(3-aminopropyl)-2,4,8, 10-tetraoxaspiro[5.5]undecane, diethylenetriamine, iminobispropylamine, methyliminobispropylamine, bis(hexamethylene)triamine, triethylenetetramine, tetraethylenepentamine, pentaethylenehexamine, N-aminoethylpiperazine, N-aminopropylpiperazine, 1,4-bis(aminoethylpiperazine), 1,4-bis(aminopropylpiperazine), 2,6-diaminopyridine and bis(3,4-diaminophenyl) sulfone; secondary amines such as diethylamine, dipropylamine, di-n-butylamine, di-sec-butylamine, diisobutylamine, di-n-pentylamine, di-3-pentylamine, dihexylamine, dioctylamine, di(2-ethylhexyl)amine, methylhexylamine, diallylamine, pyrrolidine, piperidine, 2-, 3- or 4-picoline, 2,4-, 2,6- or 3,5-lupetidine, diphenylamine, N-methylaniline, N-ethylaniline, dibenzylamine, methylbenzylamine, dinaphthylamine, pyrrole indoline, indole and morpholine; secondary polyamines such as N,N'-dimethylethylenediamine, N,N'-dimethyl-1,2-diaminopropane, N,N'-dimethyl-1,3-diaminopropane, N,N'-dimethyl-1,2-diaminobutane, N,N-dimethyl-1,3-diaminobutane, N,N'-dimethyl-1,4-diaminobutane, N,N'-dimethyl-1,5-diaminopentane, N,N'-dimethyl-1,6-diaminohexane, N,N'-dimethyl-1,7-diaminoheptane, N,N'-diethylethylenediamine, N,N'-diethyl-1,2-diaminopropane, N,N'-diethyl-1,3-diaminopropane, N,N'-diethyl-1,2-diaminobutane, N,N'-diethyl-1,3-diaminobutane, N,N'-diethyl-1,4-diaminobutane, N,N'-diethyl-1,6-diaminohexane, piperazine, 2-methylpiperazine, 2,5- or 2,6-dimethylpiperazine, homopiperazine, 1,1-di(4-piperidyl)methane, 1,2-di(4-piperidyl)ethane, 1,3-di(4-piperidyl)propane and 1,4-di(4-piperidyl)butane; tertiary amines such as trimothylamine; triethylamine, tri-n-propylamine, triisopropylamine, tri(1,2-dimethylpropyl)amine, tri(3-methoxypropyl)amine, tri-n-butylamine, triisobutylamine, tri-sec-butylamine, tri-n-pentylamine, tri-3-pentylamine, tri-n-hexylamine, tri-n-octylamine, tri(2-ethylhexyl)amine, tridodecylamine, trilaurylamine, dicyclohexylethylamine, cyclohexyldiethylamine, tricyclohexylamine, N,N-dimethylhexylamine, N-methyldihexylamine, N,N-dimethylcyclohexylamine, N-methyldicyclohexylamine, N,N-diethylethanolamine, N,N-dimethylethanolamine, N-ethyldiethanolamine, triethanolamine, tribenzylamine, N,N-dimethylbenzylamine, diethylbenzylamine, triphenylamine, N,N-dimethylamino-p-cresol, N,N-dimethylaminomethylphenol, 2-(N,N dimethylaminomethyl)phenol, N,N-dimethylaniline, N,N-diethylaniline, pyridine, quinoline, N-methylmorpholine, N-methylpiperidine and 2-(2-dimethylaminoethoxy)-4-methyl-1,3,2-dioxabornane; tertiary polyamines such as tetramethylethylenediamine, pyrazine, N,N'-dimethylpiperazine, N,N'-bis(2-hydroxypropyl)piperazine, hexamethylenetetramine, N,N,N',N-tetramethyl-1,3-butanamine, 2-dimethylamino-2-hydroxypropane, diethyaminoethanol, N,N,N-tris(3-dimethylaminopropyl)amine, 2,4,6-tris(N,N,-dimethylaminomethyl)phenol and heptamethylisobiguanide; imidazole compounds such as imidazole, N-methylimidazole, 2-methylimidazole, 4-methylimidazole, N-ethylimidazole, 2-ethylimidazole, 4-ethylimidazole, N-butylimidazole, 2-butylimidazole, N-undecylimidazole, 2-undecylimidazole, N-phenylimidazole, 2-phenylimidazole, N-benzylimidazole, 2-benzylimidazole, 2-mercaptoimidaxole, 2-mercapto-N-methylimidazole, 2-mercaptobenzoimidazole, 3-mercapto-4-methyl-4H-1,2,4-triazole, 5-mercapto-1-methyltetrazole, 2,5-dimercapto-1,3,4-thiadiazole, 1-benzyl-2-methylimidazole, N-(2'-cyanoethyl)-2-methylimidazole, N-(2'-cycanoethyl)-2-undecylimidazole, N-(2'-cyanoethyl)-2-phenylimidazole, 3,3-bis(2-ethyl-4-methylimidazolyl)methane, addition products of alkylimidazoles and isocyanuric acid; and amidine compounds such as 1,8-diazabicyclo[5.4.0]undecene-7, 1,5-diazabicyclo [4.3.0]nonene-5, 6-dibutylamino-1,8-diazabicyclo[5.4.0]undecene-7.

### (2) Complexes of amines and boron

Complexes of the amines described in (1) with borane or boron trifluoride.

### (3) Phosphine compounds

Trimethylphosphine, triethylphosphine, triisopropylphosphine, tri-n-butylphosphine, tri-n-hexylphosphine, tri-n-octylphosphine, tricyclohexylphosphine, triphenylphosphine, tribenzylphosphine, tris(2-methylphenyl)phosphine, tris(3-methylphenyl)phosphine, tris(4-methylphenyl)phosphine, tris(diethylamino)phosphine, tris(4-methylphenyl)phosphine, dimethylphenylphosphine, diethylphenylphosphine, dicyclohexyolphenylphosphine, ethyldiphenylphosphine, diphenylcyclohexylphosphine and chlorodiphenylphosphine.

### (4) Quaternary ammonium salts

Tetramethylammonium chloride, tetramethylammonium bromide, tetramethylammonium acetate, tetraethylammonium chloride, tetraethylammonium bromide, tetraethylammonium acetate, tetra-n-butylammonium fluoride, tetra-n-butylammonium chloride, tetra-n-butylammonium bromide, tetra-n-butylammonium iodide, tetra-n-butylammonium acetate, tetra-n-butylammonium borohydride, tetra-n-butylammonium hexafluorophosphite, tetra-n-butylammonium hydrogensulfite, tetra-n-butylammonium tetrafluoroborate, tetra-n-butylammonium tetraphenylborate, tetra-n-butylammonium p-toluenesulfonate, tetra-n-hexylammonium chloride, tetra-n-hexylammonium bromide, tetra-n-hexylammonium acetate, tetra-n-octylammonium chloride, tetra-n-octylammonium bromide, tetra-n-octylammonium acetate, trimethyl-n-octylammonium chloride, trimethyldecylammonium chloride, trimethyldodecylammonium chloride, trimethylcetylammonium chloride, trimethyllaurylammonium chloride, trimethylbenzylammonium chloride, trimethylbenzylammonium bromide, triethyl-n-octylammonium chloride, triethylbenzylammonium chloride, triethylbenzylammonium bromide, tri-n-butyl-n-octylammonium chloride, tri-n-butylbenzylammonium fluoride, tri-n-butylbenzylammonium chloride, tri-n-butylbenzylammonium bromide, tri-n-butylbenzylammonium iodide, n-butyldimethylbenzylammonium chloride, n-octyldimethylbenzylammonium chloride, decyldimethylbenzylammonium chloride, dodecyldimethylbenzylammonium chloride, cetyldimethylbenzylammonium chloride, lauryldimethylbenzylammonium chloride, methyltriphenylammonium chloride, methyltribenzylammonium chloride, methyltriphenylammonium bromide, methyltribenzylammonium bromide, ethyltriphenylammonium chloride, ethyltribenzylammonium chloride, ethyltriphenylammonium bromide, ethyltribenzylammonium bromide, n-butyltriphenylammonium chloride, n-butyltribenzylammonium chloride, n-butyltriphenylummonium bromide, n-butyltribenzylammonium bromide, 1-methylpyridinium chloride, 1-methylpyridinium bromide, 1-ethylpyridinium chloride, 1-ethylpyridinium bromide, 1-n-butylpyridmnium chloride, 1-n-butylpyridmnium bromide, 1-n-hexylpyridinium chloride, 1-n-hexylpyridinium bromide, 1-n-octylpyridinium bromide, 1-n-dodecylpyridinium chloride, 1-n-dodecylpyridinium bromide, 1-n-cetylpyridinium chloride, 1-n-cetylpyridinium bromide, 1-phenylpyridinium chloride, 1-phenylpyridinium bromide, 1-benzylpyridinium chloride, 1-benzylpyridinium bromide, 1-methylpicodinium chloride, 1-methylpicodinium bromide, 1-ethylpicodnium chloride, 1-ethylpicodnium bromide, 1-n-butylpicolinium chloride, 1-n-butylpicolinium bromide, 1-n-hexylpicolinium chloride, 1-n-hexylpicolinium bromide, 1-n-octylpicolinium chloride, 1-n-octylpicolinium bromide, 1-n-dodecylpicolinium chloride, 1-n-dodecylpicolinium bromide, 1-n-cetylpicolinium chloride, 1-n-cetylpicolinium bromide, 1-phenylpicolinium chloride, 1-phenylpicolinium bromide, 1-benzylpicolinium chloride and 1-bonzylpicolinium bromide.

### (5) Quaternary phosphonium salts

Tetramethylphosphonium chloride, tetramethylphosphonium bromide, tetraethylphosphonium chloride, tetraethylphosphonium bromide, tetra-n-butylphosphonium chloride, tetra-n-butylphosphonium bromide, tetra-n-butylphosphonium iodide, tetra-n-hexylphosphonium bromide, tetra-n-octylphosphonium bromide, methyltriphenylphosphonium bromide, methyltriphenylphosphonium iodide, ethyltriphenylphosphonium bromide, ethyltriphenylphosphonium iodide, n-butyltriphenylphosphonium bromide, n-butyltriphenylphosphonium iodide, n-hexyltriphenylphosphonium bromide, n-octyltriphenylphosphonium bromide, tetraphenylphosphonium bromide, tetrakishydroxymethylphosphonium chloride, tetrakishydroxymethylphosphonium bromide, tetrakishydroxyethylphosphonium chloride and tetrakishydroxybutylphosphonium chloride.

### (6) Tertiary sulfonium salts

Trimethylsulfonium bromide, triethylsulfonium bromide, tri-n-butylsulfonium) chloride, tri-n-butylsulfonium bromide, tri-n-butylsulfonium iodide, tri-n-butylsulfonium totrafluoroborate, tri-n-hexylsulfonium bromide, tri-n-octylsulfonium bromide, triphenylsulfonium chloride, triphenylsulfonium bromide and triphenylsulfonium iodide.

### (7) Secondary iodonium salts

Diphenyliodonium chloride, diphenyliodonium bromide and diphenyliodonium iodide.

### (8) Mineral acids

Hydrochloric acid, sulfuric acid, nitric acid, phosphoric acid and carbonic acid, and half esters of these mineral acids.

### (9) Lewis acids

Boron trifluoride, boron trifluoride etherates, aluminum fluoride, aluminum chloride, triphenylaluminum, potassium octanoate, calcium acetate, tetraisopropoxytitanium, tetrabutoxytitanium, tetrachlorotitanium, 2-ethylhexyl titanate, dimethyltin oxide, dimethyltin dichloride, dibutyltin diacetate, dibutyltin acetate, dibutyltin dilaurate, dibutyltin laurate, dibutyltin octanoate, dibutyltin bis(dodecylmercaptide), dibutyltin bis(isooctylthioglycolate), dibutyltin oxide, butyltin trichloride, dibutyltin dichloride, tributyltin chloride, tetrabutyltin, dioctyltin diacetate, dioctylthin acetate, dioctyltin dilaurate, dioctyltin laurate, dioctyltin diricinoleate, dioctyltin dioleate, dioctylthin di(6-hydroxy)caproate, dioctylthin bis(isooctylthioglycolate), dioctyltin oxide, dioctyltin dichloride, dioctyltin maleate, dioctyltin bis(butylmaleate), didodecyltin diricinoleate, tin stearate, zinc chloride, zinc acetylacetone, copper oleate, copper acetylacetone, iron acetylacetone, iron naphthenate, iron lactate, iron citrate and iron gluconate.

### (10) Organic acids

Acetic acid, acetic anhydride, oxalic acid, chloroacetic acid, dichloroacetic acid, succinic acid, maleic acid, glutaric acid, formic acid, lactic acid, butyric acid, salicylic acid, benzoic acid, propionic acid, cinnamic acid, malonic acid, phthalic acid, acrylic acid, and esters and half esters of these organic acids.

### (11) Silicic acids

Silicic acid.

### (12) Tetrafluoroboric acid

### (13) Peroxides

Peroxides such as cumyl peroxyncodecanoate, diisopropyl peroxydicarbonate, diallyl peroxydicarbonate, di-n-propyl peroxydicarbonate, dimyristyl peroxydicarbonate, cumyl peroxyneohexanoate, tert-hexyl peroxyneodecanoate, tert-butyl peroxyneodecanoate, tert-hoxyl peroxyneohexanoate, tert-butyl peroxyneohexanoate, 2,4-dichlorobenzoyl peroxide, benzoyl peroxide, dicumyl peroxide and di-tert-butyl peroxide, and hydroperoxides such as cumone hydroperoxide and tert-butyl hydroperoxide;

### (14) Azo compounds

2,2'-Azobis(4-methoxy-2,4-dimethylvaleronitrile), 2,2'-azobis(2-cyclopropylpropionitrile), 2,2'-azobis(2,4-dimethylvaleronitrile), 2,2'-azobisisobutyronitrile, 2,2'-azobis(2-methylbutyronitrile), 1,1'-azobis(cyclohexane-1-carbonitrile), 1-[(1-cyano-1-methylethyl)azo]formamide, 2-phenylazo-4-methoxy-2,4-dimethylvalexonitrile, 2,2'-azobis(2-methylpropane) and 2,2'-azobis(2,4,4-trimothylpentane).

### (15) Condensation products of aldehydes and amine compounds

Reaction products of acetaldehyde and ammonia, condensation products of formaldehyde and p-toluidine, condensation products of acetaldehyde and p-toluidine, reaction products of formaldehyde and aniline, reaction products of acetaldehyde and aniline, reaction products of butyraldehyde and aniline, reaction products of formaldehyde, acetaldehyde and aniline, reaction products of acetaldehyde, butyraldehyde and aniline, condensation products of butyraldehyde and monobutylamine, reaction products of butyraldehyde and butylidene aniline, reaction products of heptaldehyde and aniline, reaction products of tricrotonylidene and tetramine, condensation products of α-ethyl-β-propylacrolein and aniline, and condensation products of formaldehyde and alkylimidazole.

### (16) Guanidine compounds

Diphenyl guanidine, phenyltolyl guanidine, phenylxylyl guanidine, tolylxylyl guanidine, di-o-tolyl guanidine, o-tolyl guanide, diphenyl guanidine phthalate, tetramethyl guanidine and di-o-tolyl guanidine salt of dicatecholboric acid.

### (17) Thiourea compounds

Thiocarboanilide, di-o-tolylthiourea, ethylenethiourea, diethylthiourea, dibutylthiourea, dilaurylthiourea, trimethylthiourea, dimethylethylthiourea and tetramethylthiourea.

### (18) Thiazole compounds

2-Mezcaptobenzothiazole, dibenzothiazyl disulfide, cyclohexylamine salt of 2-mercaptobenzothiazole, 2-(2,4-dinitrophenylthio)benzothiazole, 2-(morpholinodithio)benzothiazole, 2-(2,6-dimethyl-4-morpholinothio)benzothiazole, N,N-diethylthiocarbamoyl-2-benzothiazolyl sulfide, 1,3-bis(2-benzothiazolylmercaptomethyl)urea, benzothiazyl thiobenzoate, 2-mercaptothiazoline, sodium salt of 2-mercaptobenzothiazole, zinc salt of 2-mercaptobenzothiazole and complex salt of dibenzothiazyl disulfide and zinc chloride.

### (19) Sulfenamide compounds

N-cyclohexyl-2-benzothiazylsulfenamide, N-tert-butyl-2-benzothiazylsulfenamide, N-tert-octyl-2-benzothiazylsulfenamide, N-oxydiethylene-2-benzothiazylsulfenamide, N,N-diethyl-2-benzothiazylsulfenamide, N,N-diisopropyl-2-benzothiazylsulfenamide and N,N-dicyclohexyl-2-benzothiazylsulfenamide.

### (20) Thiuram compounds

Tetramethylthiuram monosulfide, tetraethylthiuram monosulfide, tetrabutylthiuram monosulfide, dipentamethylenethiuram monosulfide, tetramethylthiuram disulfide, tetraethylthiuram disulfide, tetrabutylthiuram disulfide, N,N'-dimethyl-N,N'-diphenylthiuram disulfide, N,N'-diethyl-N,N'-diphenylthiuram disulfide, dipentamethylenethiuram disulfide, dipentamethylenethiuram tetrasulfide and cyclic thiurams.

### (21) Dithiocarbamate compounds

Sodium dimethyldithiocarbamate, sodium diethyldithiocarbamate, sodium dibutyldithiocarbamate, sodium pentamethylenedithiocarbamate, sodium cyclohexylethyldithiocarbamate, potassium dimethyldithiocarbamate, lead dimethyldithiocarbamate, zinc dimethyldithiocarbamate, zinc diethyldithiocarbamate, zinc dibutyldithiocarbamate, zinc dibenzyldithiocarbamate, zinc pentamethylenedithiocarbamate, zinc dimethylpentamethylenedithiocarbamate, zinc ethylphenylithiocarbamate, bismuth dimethyldithiocarbamate, cadmium diethyldithiocarbamate, cadmium pentamethylenedithiocarbamate, selenium dimethyldithiocarbamate, selenium diethyldithiocarbamate, tellurium dimethyldithiocarbamate, tellurium diethyldithiocarbamate, iron dimethyldithiocarbamate, copper dimethyldithiocarbamate, diethylammonium diethyldithiocarbamate, N,N-cyclohexylammonium dibutyldithiocarbamate, piperidine pentamethylenedithiocarbamate, cyclohexyethylammonium sodium cyclohoxyothyldithiocarbamate, pipecoline methylpentamethylenedithiocarbamate and complex compound of zinc pentamethylenedithiocarbamate and piperidine.

### (22) Xanthate compounds

Sodium isopropylxanthate, zinc isopropylxanthate, zinc butylxanthate and dibutylxanthogenic disulfide.

### (23) Acid phosphoric acid esters

Mono- and/or dimetbyl phosphates, mono- and/or diethyl phosphates, mono- and/or dipropyl phosphates, mono- and/or dibutyl phosphates, mono- and/or dihexyl phosphates, mono- and/or dioctyl phosphates, mono- and/or didecyl phosphates, mono- and/or didodecyl phosphates, mono- and/or diphenyl phosphates, mono- and/or dibenzyl phosphates and mono- and/or didecanol phosphates.

The catalyst for curing the composition of the present invention by polymerization is not limited to the above compounds, and any other compounds may be suitably used as the curing catalyst as long as they exhibit the same polymerization-curing effect. The curing catalysts may be used alone or in combination of two or more. The amount of the curing catalyst used in the present invention is generally 0.0001 to 10.0 parts by weight, preferably 0.0005 to 5.0 parts by weight per 100 parts by weight of the amount of the composition for optical material. When the amount of the curing catalyst exceeds 10.0 parts by weight, the refractive index and heat resistance of the cured product decrease and the cured product is colored. When the amount is less than 0.0001 part by weight, the curing does not proceed sufficiently and the heat resistance of the cured product becomes insufficient.

To improve various properties such as oxidation resistance, weather resistance, dyeability and strength, compounds capable of reacting with a part or whole of the components (a) to (c) may be added to the composition for optical material of the present invention as property improvers and cured together by polymerization. In such a case, an additional polymerization-curing catalyst may be added for the reaction to improve properties, if required. Examples of the property improvers include phenols, alcohols, carboxylic acids, carboxylic anhydrides, vinyl compounds including (meth)acrylates and (thio)epoxy compounds. These compounds may be added in such an amount as to provide required physical properties and cause no adverse affect on the present invention.

To improve the practical properties of the optical materials being produced by curing the composition of the present invention by polymerization, the composition may be added with known additives such as antioxidants, ultraviolet light absorbents, anti-yellowing agents, bluing agents and pigments, When the composition of the present invention is easy to separate from molds during polymerization, it is effective to use or add known external and/or internal adhesion modifiers, thereby controlling and improving the adhesion between the cured product and the mold. Examples of the internal adhesion modifiers include silane compounds such as 3-methacryloxypropyltrimethoxysilane, 3-glycidoxypropyltrimethoxysilane, N-(2-aminoethyl)-3-aminopropyltrimethoxysilane and 3-mercaptopropyltrimethoxysilane. The internal adhesion modifier may be used in an amount of 0.00001 to 5 parts by weight per 100 parts by weight of the composition of the present invention. On the other hand, when the cured product is difficult to release from molds after polymerization, it is effective to use or add known external and/or internal mold release agents, thereby improving the releasability of the cured product from the molds. Examples of the internal mold release agents include fluorine-based nonionic surfactants, silicon-based nonionic surfactants, quaternary alkylammonium salts, esters of phosphoric acid, esters of acid phosphoric acids, oxyalkylene type esters of acid phosphoric acids, alkali metal salts of esters of acid phosphoric acids, alkali metal salts of oxyalkylene type esters of acid phosphoric acid, metal salts of higher fatty acids, paraffin, wax, higher aliphatic amides, higher aliphatic alcohols, polysiloxanes and addition products of ethylene oxide and aliphatic amines. The external and/or internal mold release agents may be used in an amount of 0.00001 to 5 parts by weight per 100 parts by weight of the composition.

The compound (a), the compound (b), the inorganic component (c) and optional components such as the property improver, the curing catalyst, the adhesion modifier, the mold release agent and other additives such as antioxidants, ultraviolet light absorbers, anti-yellowing agents, bluing agents and pigments arc mixed together to prepare a homogeneous mixture. Then the resultant mixture is cast into a mold made of glass or metal and cured under heating by polymerization. The cured product is then taken out of the mold to obtain the optical material of the present invention.

Alternatively, a part or whole of the compound (a), the compound (b), the inorganic component (c) and the optional property improver may be prepolymerized at -100 to 160°C for 0.1 to 480 h in the presence or absence of a catalyst under or without stirring to prepare a composition for optical material. The resultant composition may be cast into a mold and cured under heating. In particular, the prepolymerization is effective for such a composition containing solid components that make the handling difficult. The prepolymerization may be carried out preferably at -10 to 120°C for 0.1 to 240 hours and more preferably at 0 to 100°C for 1 to 120 hours. If appropriate, the additives such as the adhesion modifiers or mold release agents, antioxidants, ultraviolet light absorbers, anti-yellowing agents, bluing agents and pigments may be added prior to prepolymerization.

The method for producing the cured resin optical material according to the present invention is more specifically described below. As described above, the essential components (a) to (c), the curing catalyst and other optional components are mixed together to prepare a composition, which is then cast into a mold and cured by polymerization. The compound (a), the compound (b), the inorganic component (c), the property improver capable of reacting with a part or whole of the components (a) to (c), the catalyst and the additives such as the adhesion modifier or mold release agent, the antioxidant, the ultraviolet light absorber, the anti-yellowing agent, the bluing agent and the pigment may be mixed together under stirring in the same vessel at the same time. Alternatively, the above starting materials may be mixed by adding successively. The starting materials may be mixed separately in two or more portions, and then, collectively mixed in the same vessel. The components (a) to (c), the catalyst, the additives, etc. may be mixed in any order. In general, the mixing temperature and the mixing time are not limited as long as the components can be sufficiently mixed together. However, an excessively high mixing temperature and an excessively long mixing time are not preferable because undesirable reactions take place between the components (a) to (c) and the additives to increase the viscosity, thereby making the casting operation difficult. Therefore, the mixing temperature is about -50 to 100°C, preferably -30 to 70°C and more preferably -5 to 50°C. The mixing time is preferably about 1 minute to 12 h, more preferably about 5 minutes to 10 h and most preferably about 5 minutes to 6 h. The components (a) to (c), the catalyst and the additives are preferably subjected to degassing under vacuum before, during or after mixing to prevent formation of bubbles during the curing operation by polymerization. The vacuum degree of the degassing is 0.1 to 700 mmHg and preferably 0.5 to 300 mmHg. To obtain a better quality of the optical material of the present invention, it is preferable to remove impurities from the components (a) to (c), the catalyst and the additives before or after mixing by filtration through a filter having a pore size of about 0.05 to 3 µm. The thus prepared composition is cast into a mold made of glass or metal, and heated in an electric furnace, water bath or oil bath to cure by polymerization. The curing time is preferably 0.1 to 100 h and more preferably 1 to 72 h. The curing temperature is preferably -10 to 160°C and more preferably 0 to 140°C. The polymerization can be conducted by suitably combining a step of holding the temperature at a specific polymerization temperature for a specific period of time, a step of increasing the temperature at a rate of 0.1 to 100°C/h and a step of decreasing the temperature at a rate of 0.1 to 100°C/h. To remove strains, the material after the curing is preferably annealed at 50 to 150°C for about 10 min to 5 h. Where necessary, the obtained optical material may be subjected to surface treatments for dyeing, hard coat formation, reflection prevention, clouding prevention and impact resistance.

The optical material obtained by curing the composition of the present invention by polymerization exhibits a refractive index of 1.55 to 1.75, and an Abbe's number from 35 to 50 at a refractive index of 1.60, from 30 to 45 at a refractive index of 1.65 and from 30 to 40 at a refractive index of 1.70.

The present invention will be described in more detail by reference to the following examples, but it should be noted that these examples are not intended to limit the scope of the present invention thereto. The cured products (optical materials) were evaluated by the following methods.

### Refractivity index (nD) and Abbe's number (vD):

Measured at 25°C using an Abbe's refractometer.

### Impact resistance:

A 480-g iron ball was dropped to a flat plate having a thickness of 2.5 mm from the height of 127 cm. When the flat polymer plate was not broken, the rating A was assigned, and when broken, the rating B was assigned.

### EXAMPLE 1

A mixture containing 45 parts by weight of 4-mercaptomethyl-1,8-dimercapto-3,6-dithiaoctane, 5 parts by weight of elementary sulfur and 1 part by weight of selenium sulfide was stirred in a nitrogen atmosphere at 100°C for one hour. After cooling, the mixture was mixed with 49 parts by weight of 1,3-bis(isocyanomethyl)benzene, a catalyst composed of 0.01 part by weight of cetyldimethylbenzylammonium chloride and 0.005 part by weight of dibutyltin dilaurate, and 0.05 part by weight of dioctyl phosphate as an internal mold release agent to obtain a homogeneous liquid. The homogeneous liquid was passed through a PTFE filter having a pore size of 0.5 µm cast into a mold for a flat lens with a thickness of 2.5 mm, and cured by polymerization under heating while raising the temperature from 10°C to 120°C over 22 h in an oven, thereby preparing a lens. The obtained lens not only had good heat resistance and physical properties but also showed excellent transparency and surface condition. The measured refractive index, Abbe's number and impact resistance of the lens are shown in Table 1.

### EXAMPLES 2 to 8

The procedures of Example 1 were repeated except that the formulation was changed as shown in Table 1 and the catalyst shown in Table 1 was used. In all cases, the obtained lenses not only had good heat resistance and physical properties but also showed excellent transparency and surface condition. The measured refractive index, Abbe's number and impact resistance of the lenses are shown in Table 1.

### COMPARATIVE EXAMPLES 1-8

The procedures of Examples 1 to 8 were respectively repeated except that no inorganic component (c) was used. The measured refractive index, Abbe's number and impact resistance of the lenses are shown in Table 1. It was confirmed that the refractive indices of the lenses were lower than those of the lenses obtained in Examples because no inorganic compound containing sulfur and/or selenium was used.

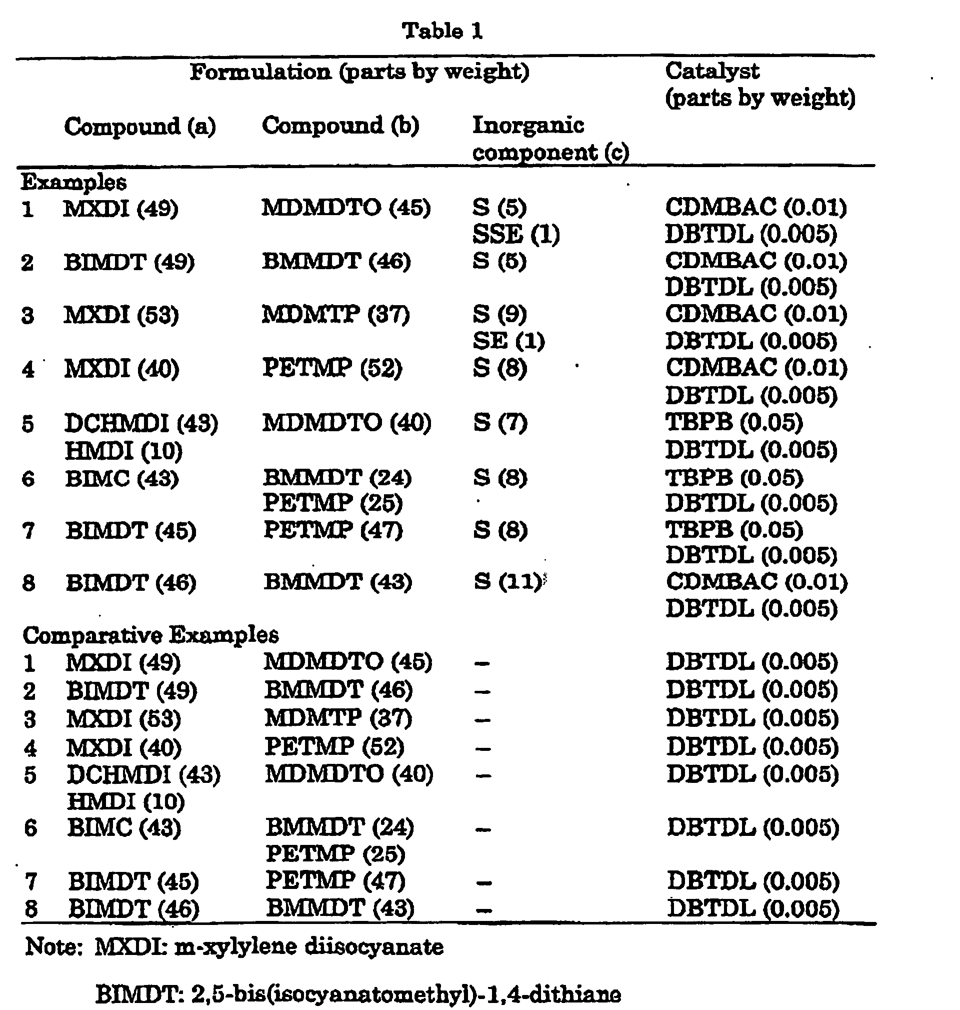

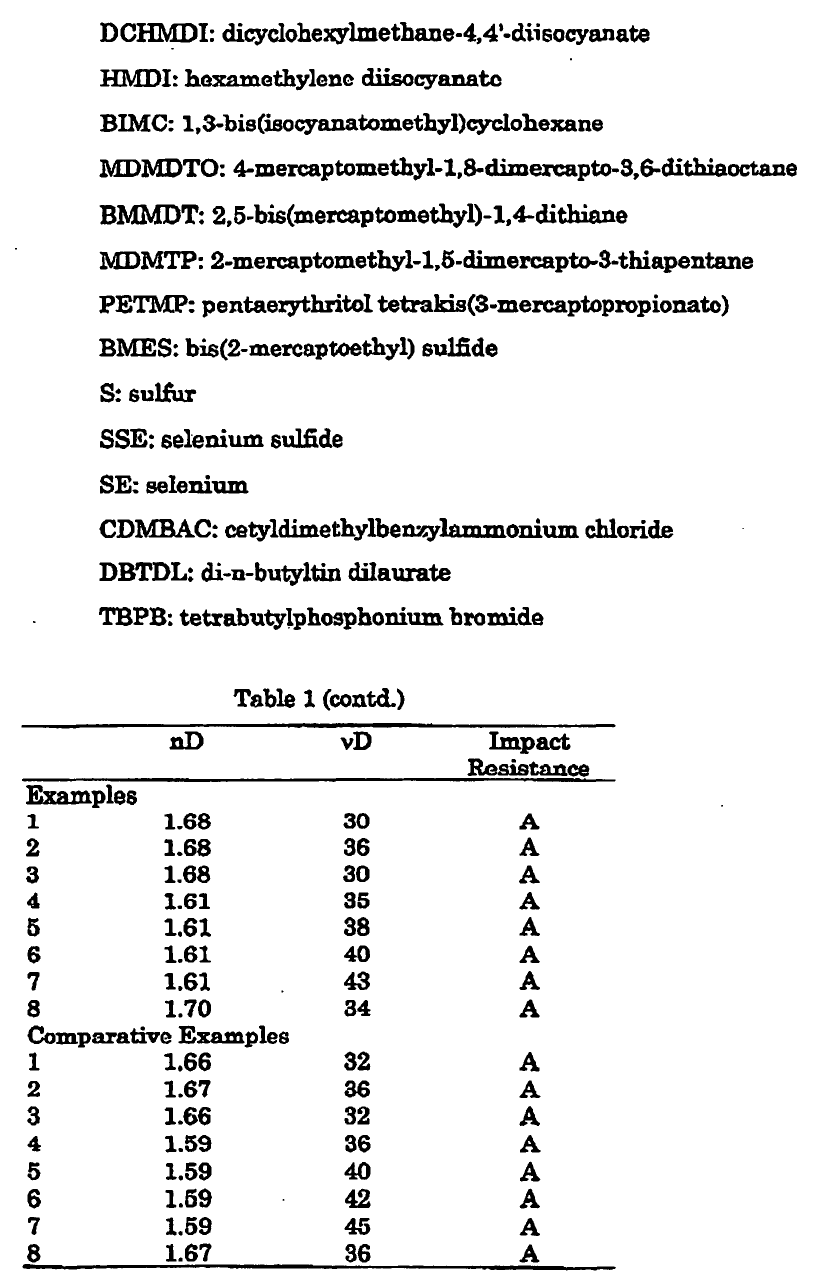

### COMPARATIVE EXAMPLE 9

It was attempted to conduct the same procedures as in Examples 1 to 8 except that no compound (a) was used. However, the inorganic component (c) was not dissolved in the compound (b) to failing to obtain a homogeneous liquid, making the casting into a mold unable.

### COMPARATIVE EXAMPLE 10

The same procedures as in Examples 1 to 8 were repeated except that no compound (b) was used. However, it was confirmed that even after raising the temperature, the composition in a mold still remained in a liquid state, thereby failing to obtain a cured lens.

### COMPARATIVE EXAMPLE 11

A mixture containing 100 parts by weight of bis(β-epithiopropyl)sulfide and 0.05 part by weight of tetrabutylammonium bromide as a catalyst was stirred in a nitrogen atmosphere to obtain a homogeneous liquid. The homogeneous liquid was passed through a PTFE filter having a pore size of 0.5 µm, cast into a mold for a flat lens with a thickness of 2.5 mm and cured by polymerization under heating while raising the temperature from 10°C to 120°C over 22 h in an oven, thereby preparing a lens. The obtained lens not only had good heat resistance and physical properties but also showed excellent transparency and surface condition, Although the obtained lens also showed well-balanced optical properties, i.e., had a refractive index as high as 1.71 and an Abbe's number as large as 35, the impact resistance was the rating B.

### INDUSTRIAL APPLICABILITY

The optical material obtained by curing the composition of the present invention by polymerization not only had a sufficiently high strength but also showed well balanced optical properties, i.e., a high refractive index and a large Abbe's number, that cannot be attained in the conventional optical materials. The lens produced from the optical material of the present invention is further reduced in thickness.

## Claims

1. A composition for optical material, comprising:
(a) a compound having in one molecule at least one group selected from the group consisting of isocyanate group and isothiocyanate group;
(b) a compound having at least one mercapto group in one molecule; and
(c) at least one inorganic component selected from the group consisting of sulfur, selenium and selenium sulfide,
wherein the amount of the proportions of the compound (a), the compound (b) and the component (c) are 10 to 90 parts by weight of the compound (a), 10 to 90 parts by weight of the compound (b) and 0.1 to 50 parts by weight of the component (c).

2. The composition according to claim 1, wherein the compound (a) is at least one compound selected from the group consisting of m-xylylene diisocyanate, 2,5-diisocyanatomethyl-1,4-dithiane, dicyclohexylmethane-4,4'-diisocyanate, hexamethylene diisocyanate, 1,3-bis(isocyanatomethyl)cyclohexane and 2,5-diisocyanatomethylnorbornene.

3. The composition according to claim 1 or Claim 2, wherein the compound (b) is at least one compound selected from the group consisting of 4-mercaptomethyl-1,8-dimercapto-3,6-dithiaoctane, 2,5-bis(mercaptomethyl)-1,4-dithiane, 2-mercaptomethyl-1,5-dimercapto-3-thiapentane, pentaerythritol tetrakis(3-mercaptopropionate), bis(2-mercaptoethyl) sulfide, pentaerythritol tetrakis(2-mercaptoacetate), 1,2,6,7-tetramercapto-4-thiaheptane, tetrakis(7-mercapto-2,5-dithiaheptyl)methane, tetrakis(4-mercapto-2-thiabutyl)methane and pentaerythrithiol.

4. The composition according to Claim 1 or 2, wherein the compound (b) has a sulfide linkage.

5. The composition according to claim 4, wherein the compound (b) having sulfide linkage is at least one compound selected from the group consisting of 4-mercaptomethyl-1,8-dimercapto-3,6-dithiaoctane, 2,5-bis(mercaptomethyl)-1,4-dithiane, 2-mercaptomethyl-1,5-dimercapto-3-thiapentane, bis(2-mercaptoethyl) sulfide, 1,2,6,7-tetramercapto-4-thiaheptane, tetrakis(7-mercapto-2,5-dithiaheptyl)methane, tetrakis(4-mercapto-2-thiabutyl)methane and pentaerythrithiol.

6. A composition for optical material, comprising:
(a) 10 to 90 parts by weight of at least one compound selected from the group consisting of m-xylylene diisocyanate, 2, 5-diisocyanatemethyl-1,4-dithiane, dicyclohexylmethane-4,4'-diisocyanate, hexamethylene diisocyanate, 1,3-bis(isocyanatomethyl)cyclohexane and 2,5-diisocyanatomethylnorbornene;
(b) 10 to 90 parts by weight of at least one compound selected from the group consisting of 4-mercaptomethyl-1,8-dimercapto-3,6-dithiaoctane, 2,5-bis(mercaptomethyl)-1,4-dithiane, 2-mercaptomethyl-1,5-dimercapto-3-thiapentane, pentaerythritol tetrakis(3-mercaptopropionate), bis(2-mercaptoethyl) sulfide, pentaerythritol tetrakis(2-mercaptoacetate), 1,2,6,7-tetramercapto-4-thiaheptane, tetrakis(7-mercapto-2,5-dithiaheptyl)methane, tetrakis(4-mercapto-2-thiabutyl)methane and pentaerythrithiol; and
(c) 0.1 to 50 parts by weight of at least one inorganic substance selected from the group consisting of sulfur, selenium and selenium sulfide.

7. A method for producing an optical material comprising a step of curing the composition according to any one of claims 1 to 6 in the presence or absence of a curing catalyst by polymerization under heating.

8. An optical material produced by the method according to claim 7.

9. An optical lens comprising the optical material according to claim 8.

## Patentansprüche

1. Zusammensetzung für ein optisches Material, umfassend:
(a) eine Verbindung, die in einem Molekül mindestens eine Gruppe aufweist, die aus der aus Isocyanatgruppen und Isothiocyanatgruppen bestehenden Gruppe ausgewählt wird;
(b) eine Verbindung, die mindestens eine Mercaptogruppe in einem Molekül aufweist; und
(c) mindestens eine anorganische Komponente, die ausgewählt wird aus der aus Schwefel, Selen und Selensufid bestehenden Gruppe,
wobei die Menge der Anteile von Verbindung (a), Verbindung (b) und Komponente (c) 10 - 90 Gewichtsteile Verbindung (a), 10 - 90 Gewichtsteile Verbindung (b) und 0,1 - 50 Gewichtsteile Komponente (c) betragen.

2. Zusammensetzung nach Anspruch 1 wober Verbindung (a) mindestens eine Verbindung ist, die ausgewählt wird aus der aus m-Xylylendiisocyanat, 2,5-Diisocyanatomethyl-1 ,4-dithian, Dicyclohexlylmethan-4,4'-diisocyanat, Hexamethylendiisocyanat, 1 ,3-Bis(isocyanatomethyl)cyclohexan und 2,5-Diisocyanatomethylnorbonen bestehenden Gruppe.

3. Zusammensetzung nach Anspruch 1 oder Anspruch 2, wobei die Verbindung (b) mindestens eine Verbindung ist, die ausgewählt wird aus der aus 4-Mercaptomethyl-1,8-dimercapto-3,6-dithiooctan, 2,5-Bis(mercaptomethyl)-1 ,4-dithian, 2-Mercaptomethyl-1 ,5-dimercapto-3-thiapentan, Pentaerythritol-tetrakis(3-mercaptopropionat), Bis(2-mercaptoethyl)sulfid, Pentaerythritoltetrakis(2-mercaptoacetat), 1,2,6,7-Tetramercapto-4-thiaheptan, Tetrakis(7-mercapto-2,5-dithiaheptyl)methan, Tetrakis(4-Mercapto-2-thiabutyl)methan und Pentaerythritiol bestehenden Gruppe.

4. Zusammensetzung nach Anspruch 1 oder 2, wobei die Verbindung (b) eine Sulfidbindung aufweist.

5. Zusammensetzung nach Anspruch4, wobei die Verbindung (b) mit einer Sulfidbindung mindestens eine Verbindung ist, die ausgewählt wird aus der aus 4-Mercaptomethyl-1 ,8-dimercapto-3,6-dithiaoctan, 2,5-Bis(mercaptomethyl)-1,4-dithian, 2-Mercaptomethyl-15-dimercapto-3-thiapentan, Bis(2-Mercaptoethyl)sulfid, 1 ,2,b, 7-Tetramercapto-4-thiaheptan, Tetrakis(7-mercapto-2,5-dithiaheptyl)methan, Tetrakis(4-mercapto-2-thiabutyl)methan und Pentaerythrithiol bestehenden Gruppe.

6. Zusammensetzung für optisches Material, umfassend:
(a) 10 - 90 Gewichtsteile mindestens einer Verbindung, die ausgewählt wird aus der aus m-Xlylendiisocyanat, 2,5-Diisocyanatomethyl-1 ,4-dithian, Dicyclohexylmethan-4,4'-diisocyanat, Hexamethylendiisocyanat, 1 ,3-Bis(isocyanatomethyl)cyclohexan und 2,5-Diisocyanatomethylnorbonen bestehenden Gruppe;
(b) 10 - 90 Gewichtsteile mindestens einer Verbindung, die ausgewählt wird aus der aus 4-Mercaptomethyl-1 ,8-dimercapto-3,6-dithiaoctan, 2,5-Bis(mercaptomethyl)-1,4-dithian, 2-Mercaptomethyl-1 ,5-dimercapto-3-thiapentan, Pentaerythritol-tetrakis(3-mercaptopropionat), Bis(2-mercaptoethyl)sulfid, Pentaerythritol-tetrakls(2-mercaptoacetat), 1,2,b,7-Tetramercapto-4-thiaheptan, Tetrakis(7-mercapto-2,5-dithiaheptyl)methan, Tetrakis(4-mercapto-2-thiabutyl)methan und Pentaerythrithiol bestehenden Gruppe; und
(c) 0, 1 - 50 Gewichtsteile mindestens einer anorganischen Substanz, die ausgewählt wird aus der aus Schwefel, Selen und Selensulfid bestehenden Gruppe.

7. Verfahren zur Herstellung eines optischen Materials, umfassend einen Schritt der Härtung der Zusammensetzung nach einem der Ansprüche 1 bis 6 in Gegenwart oder Abwesenheit eines Härtungskatalysators durch Polymerisation unter Erwärmen.

8. Optisches Material, hergestellt durch das Verfahren nach Anspruch 7.

9. Optische Linse, umfassend das optische Material nach Anspruch 8.

## Revendications

1. Composition destinée à un matériau optique, comprenant :
(a) un composant présentant dans une molécule au moins un groupe choisi dans le groupe composé du groupe isocyanate et du groupe isothiocyanate ;
(b) un composant présentant au moins un groupe mercapto dans une molécule ; et
(c) au moins un composé inorganique choisi dans le groupe constitué de soufre, sélénium et sulfure de sélénium,
dans laquelle les proportions du composant (a), du composant (b) et du composé (c) sont de 10 à 90 parties en poids du composant (a), 10 à 90 parties en poids du composant (b) et 0,1 à 50 parties en poids du composé (c).

2. Composition selon la revendication 1, dans laquelle le composant (a) est au moins un composant choisi dans le groupe constitué de diisocyanate de m-xylylène, 2,5-diisocyanatométhyl-1,4-dithiane, dicyclohexylméthane-4,4'-diisocyanate, diisocyanate d'hexaméthylène, 1,3-bis(isocyanatométhyl)cyclohexane et 2,5-diisocyanatométhylnorbornène.

3. Composition selon la revendication 1 ou la revendication 2, dans laquelle le composant (b) est au moins un composant choisi dans le groupe constitué de 4-mercaptométhyl-1,8-dimercapto-3,6-dithiaoctane, 2,5-bis(mercaptométhyl)-1,4-dithiane, 2-mercaptométhyl-1, 5-dimercapto-3-thiapentane, pentaérythritol tétrakis(3-mercaptopropionate), bis(2-mercaptoéthyl)sulfure, pentaérythritol tétrakis(2-mercaptoacétate), 1,2,6,7-tétramercapto-4-thiaheptane, tétrakis(7-mercapto-2,5-dithiaheptyl)méthane, tétrakis(4-mercapto-2-thiabutyl)méthane et pentaérythrithiol.

4. Composition selon la revendication 1 ou 2, dans laquelle le composant (b) présente une liaison sulfure.

5. Composition selon la revendication 4, dans laquelle le composant (b) présentant la liaison sulfure est au moins un composant choisi dans le groupe constitué de 4-mercaptométhyl-1,8-dimercapto-3,6-dithiaoctane, 2,5-bis(mercaptométhyl)-1,4-dithiane, 2-mercaptométhyl-1,5-dimercapto-3-thiapentane, bis(2-mercaptoéthyl)sulfure, 1,2,6,6-tétramercapto-4-thiapentane, tétrakis(7-mercapto-2,5-dithiaheptyl)méthane, tétrakis(4-mercapto-2-thiabutyl)méthane et pentaérythrithiol.

6. Composition destinée à un matériau optique, comprenant :
(a) 10 à 90 parties en poids d'au moins un composant choisi dans le groupe composé de diisocyanate de m-xylylène, 2,5-diisocyanateméthyl-1,4-dithiane, dicyclohexylméthane-4,4'-diisocyanate, diisocyanate d'hexaméthylène, 1,3-bis(isocyanatométhyl)cyclohexane et 2,5-diisocyanatométhylnorbornène ;
(b) 10 à 90 parties en poids d'au moins un composant choisi dans le groupe constitué de 4-mercaptométhyl-1,8-dimercapto-3,6-dithiaoctane, 2,5-bis(mercaptométhyl)-1,4-dithiane, 2-mercaptométhyl-1,5-dimercapto-3-thiapentane, pentaérythritol tétrakis(3-mercaptopropionate), bis(2-mercaptoéthyl)sulfure, pentaérythritol tétrakis(2-mercaptoacétate), 1,2,6,7-tétramercapto-4-thiaheptane, tétrakis(7-mercapto-2,5-dithiaheptyl)méthane, tétrakis(4-mercapto-2-thiabutyl)méthane et pentaérythrithiol ; et
(c) 0,1 à 50 parties en poids d'au moins une substance inorganique choisie dans le groupe constitué de soufre, sélénium et sulfure de sélénium.

7. Procédé d'élaboration d'un matériau optique comprenant une étape de cuisson de la composition selon l'une quelconque des revendications 1 à 6 en présence ou en l'absence d'un catalyseur de cuisson par polymérisation sous chauffage.

8. Matériau optique élaboré grâce au procédé selon la revendication 7.

9. Verre optique comprenant le matériau optique selon la revendication 8.
